# EUROPÄISCHE PATENTANMELDUNG

(11) **EP 2 916 142 A1**
(43) Veröffentlichungstag der Anmeldung: **09.09.2015**
(21) Anmeldenummer: 15156731.0
(22) Anmeldetag: 26.02.2015
(51) Int. Cl.: G01S 7/481, G01S 17/02, G01S 17/89, H04N 5/238, G02B 5/28, E01F 13/04

(54) **Digitalkamera**

(30) Priorität: 06.03.2014 DE 102014103010
(71) Anmelder: SKIDATA AG, 5083 Grödig/Salzburg (AT)
(72) Erfinder: Schlechter, Thomas, 5201 Seekirchen am Wallersee (AT)
(74) Vertreter: Karakatsanis, Georgios

(57) **Zusammenfassung**

Es wird eine Digitalkamera mit einem als CCD-oder CMOS-Sensor ausgeführten 2D-Bildsensor vorgeschlagen, mittels der anhand einer Laufzeitmessung bei Synchronisation mit einer gepulsten Infrarotquelle Entfernungen messbar sind und anhand der gemessenen Entfernungen eine 3D- Rekonstruktion eines erfassten Objektes durchführbar ist, wobei die Digitalkamera keinen Infrarot-Sperrfilter aufweist oder einen Infrarot-Sperrfilter aufweist, der dynamisch auf die Pixel des Bildsensors bezogen ganz oder teilweise aktivierbar und deaktivierbar ist, wobei für den Fall, dass der Infrarot-Sperrfilter dynamisch auf die Pixel des Bildsensors bezogen ganz oder teilweise aktivierbar und deaktivierbar ist, einzelne Bereiche des Bildsensors, für die der Infrarot-Sperrfilter deaktiviert ist, für die 3D-Rekonstruktion oder für Aufnahmen im Infrarotbereich verwendet werden, wobei die verbleibenden Bereiche des Sensors für Aufnahmen hoher Farbqualität im sichtbaren Lichtspektrum verwendet werden und wobei für den Fall, dass kein Infrarot-Sperrfilter vorhanden ist, einzelne Bereiche des Bildsensors für die 3D-Rekonstruktion oder für Aufnahmen im Infrarotbereich verwendet werden, wobei die verbleibenden Bereiche des Sensors für Aufnahmen im sichtbaren Lichtspektrum verwendet werden.

## Beschreibung

Die vorliegende Erfindung bezieht sich auf eine Digitalkamera gemäß dem Oberbegriff des Patentanspruchs 1.

Aus dem Stand der Technik ist bekannt, mittels ToF (Time of Flight)-Kameras anhand einer Laufzeitmessung bei Synchronisation mit einer gepulsten Infrarotquelle Entfernungen zu messen und anhand der gemessenen Entfernungen eine 3D- Rekonstruktion eines erfassten Objektes durchzuführen. Der Sensor der zur Infrarotquelle synchronisierten Kamera bzw. die der Kamera zugeordnete Auswerteelektronik kennt hierbei den Sendezeitpunkt des Infrarotlichtes und den Zeitpunkt der Detektion jedes einzelnen Pixels des aufgenommenen Bildes, d.h. die Laufzeit des dem Pixel zugeordneten Infrarotlichtes. Da das detektierte Infrarotlicht ausschließlich von Reflexionen des zu beobachtenden Objektes stammen kann, kann dadurch die Entfernung jedes Teiles des erfassten Objektes zur Kamera und somit eine 3D- Rekonstruktion errechnet werden.

Ferner ist aus dem Stand der Technik bekannt, vor herkömmlichen 2D-Bildsensoren einen so genannten Infrarot-Sperrfilter vorzusehen. Da diese Sensoren Licht bis ins mittlere Infrarot detektieren können ist dies erforderlich, um Aufnahmen guter Qualität im sichtbaren Lichtspektrum zu erstellen; ohne einen Infrarot-Sperrfilter werden tiefblaue und tiefrote Flächen zu hell dargestellt, wobei heiße Gegenstände auch zu hell und in unnatürlichen Farben dargestellt werden.

Der vorliegenden Erfindung liegt die Aufgabe zugrunde, eine Digitalkamera anzugeben, welche sichtbares Licht und infrarotes Licht detektieren kann, wobei wahlweise 2D-Bilder im sichtbaren- und/oder Infrarot-Bereich, 2D-Bilder im sichtbaren Bereich kombiniert mit einer 3D- Rekonstruktion eines erfassten Objektes anhand einer Laufzeitmessung bei Synchronisation mit einer Infrarotquelle oder eine reine 3D-Rekonstruktion eines erfassten Objektes anhand einer Laufzeitmessung bei Synchronisation mit einer Infrarotquelle erstellbar sind. Hierbei sollen generell 2D-Bilder im sichtbaren Bereich und die 3D- Rekonstruktion eines erfassten Objektes gleichzeitig erstellbar sein.

Diese Aufgabe wird durch die Merkmale der Patentansprüche 1 und 4 gelöst. Weitere erfindungsgemäße Ausgestaltungen und Vorteile gehen aus den Unteransprüchen hervor.

Demnach wird gemäß einer bevorzugten Ausführungsform der Erfindung eine Digitalkamera vorgeschlagen, welche einen herkömmlichen 2D-Bildsensor aufweist, der als CCD-oder CMOS-Sensor ausgeführt sein kann, wobei der nach dem Stand der Technik in der Regel eingesetzte Infrarot-Sperrfilter entfällt. Durch den Entfall des Infrarot-Sperrfilters wird ein einfacher Aufbau bei gleichzeitig gegebener Möglichkeit einer Entfernungsmessung und 3D-Rekonstruktion gewährleistet. Die durch den Entfall des Infrarot-Sperrfilters bedingte Farbverfälschung der Farben im sichtbaren Bereich kann gemäß einer Weiterbildung der Erfindung mittels digitaler Signalverarbeitung im Nachhinein korrigiert werden.

Alternativ zum Entfall des Infrarot-Sperrfilters kann dieser gemäß der Erfindung dynamisch auf die Pixel des Bildsensors bezogen ganz oder teilweise aktiviert und deaktiviert werden. Hierbei können einzelne Bereiche des Bildsensors, für die der Infrarot-Sperrfilter deaktiviert ist, für die 3D-Rekonstruktion oder für Aufnahmen im Infrarot-Bereich verwendet werden, wobei die verbleibenden Bereiche des Sensors für Aufnahmen hoher Farbqualität im sichtbaren Lichtspektrum verwendet werden.

Als Infrarot-Sperrfilter können gemäß einer Variante der Erfindung dielektrische Interferenzfilter verwendet werden, wobei in Abhängigkeit des Aufbaus des Filters, insbesondere der Schichtdicke und der Strukturierung des Filters einzelne Wellenlängen unterschiedlich gebrochen werden, wodurch das einfallende Licht aufgespalten wird und in Abhängigkeit der Wellenlänge auf individuelle Pixel fällt. Somit kann bei Verwendung eines dielektrischen Interferenzfilters als Infrarot-Sperrfilter eine unterschiedliche Verteilung des Brechungsindex und somit des einfallenden Lichts in Abhängigkeit der Wellenlänge über die Sensorfläche ermöglicht werden, wodurch für einen Teil der Fläche das Infrarot-Licht gesperrt wird. Im Rahmen einer Weiterbildung können die dielektrischen Interferenzfilter mittels elektromechanischer Aktuatoren bewegbar ausgeführt sein, um dadurch eine dynamische Aktivierung bzw. Deaktivierung des Infrarot-Sperrfilters für einzelne Bereiche zu ermöglichen.

Zusätzlich zu den stationär oder bewegbar ausgeführten Interferenzfiltern können einstellbare Mikrospiegelanordnungen verwendet werden, welche bei Bedarf das jeweils unerwünschte Licht, beispielsweise Infrarotlicht, so reflektieren können, dass es nicht auf vorgegebene Pixel fällt. Auf diese Weise wird in Kombination insbesondere mit stationär ausgeführten dielektrischen Interferenzfiltern ein dynamisch anpassbarer Infrarot-Sperrfilter gebildet.

Gemäß einer weiteren Variante der Erfindung können als Infrarot-Sperrfilter piezo-elektrisch steuerbare Interferenzfilter verwendet werden, welche unter Nutzung des Piezoeffekts gezielt Wellenlängenbereiche dämpfen oder verstärken. Durch diese Filter können vorzugsweise größere Bereiche oder die komplette Sensorfläche dynamisch mit einzelnen Wellenlängen belichtet werden, beispielsweise als Funktion der Zeit im Zeitmultiplex-Betrieb, der weiter unten erläutert wird.

Ferner können als Infrarot-Sperrfilter elektrisch abstimmbare Flüssigkristallfilter eingesetzt werden, welche eine sehr gezielte und flexible Steuerung der durchzulassenden Wellenlängen ermöglichen.

Die jeweiligen Pixelbereiche des Sensors können dabei zusammenhängend sein, sodass einzelne Bereiche umfassend jeweils mehrere Pixel für eine Aufgabe, d.h. für die 3D-Rekonstruktion bzw. für Aufnahmen im Infrarotbereich oder für Aufnahmen im sichtbaren Lichtspektrum genutzt werden. Alternativ kann die Sensorfläche alternierend pixelweise den einzelnen Aufgaben zugeordnet sein.

Durch diese Konzeption ist eine gleichzeitige Auswertung der Bildinhalte mit unterschiedlichen Informationen, nämlich mit Aufnahmen im Infrarot-Bereich umfassend eine 3D-Rekonstruktion und im sichtbaren Lichtspektrum, möglich.

Gemäß einer weiteren Ausgestaltung der Erfindung kann der ganze Bildsensor, d.h. die gesamte Sensorfläche im Zeitmultiplex-Betrieb, d.h. als Funktion der Zeit für eine der beiden Aufgaben genutzt werden, was in dem Vorteil resultiert, dass die volle Auflösung erhalten bleibt; es wird lediglich die maximal erreichbare Bildrate reduziert. Hierbei wird die Verwendung des Sensors für Aufnahmen im Infrarotbereich inklusive 3D-Rekonstruktion und für Aufnahmen im sichtbaren Lichtspektrum zeitlich eingeteilt, wobei für die Aufnahmen im sichtbaren Lichtspektrum der Infrarot-Sperrfilter aktiviert wird und die Einteilung als Funktion der Zeit einstellbar sein kann.

Gemäß der Erfindung können die infrarot-empfindlichen Pixel, d.h. die Pixel des Sensors, für die der Infrarot-Sperrfilter deaktiviert ist, neben der Entfernungsmessung und 3D-Rekonstruktion mittels gepulstem Infrarot-Licht auch zur Detektion von Infrarot-Dauerlicht für Aufnahmen im Infrarotbereich benutzt werden. Dadurch kann bei schlechten Sichtverhältnissen, wie z.B. bei Nebel oder Dunkelheit die Erfassungsqualität erhöht werden, wenn der sichtbare Spektralbereich nicht genug Performance bzw. Qualität liefern kann.

Alternativ zur Verwendung eines herkömmlichen 2D-Bildsensors kann ein um spezielle für ToF-Aufgaben optimierte Pixel erweiterter Standard-2D-CMOS-Sensor verwendet werden. Hierbei können als für ToF-Aufgaben optimierte Pixel auch Photonenmischdetektoren (PMD) -Pixel verwendet werden, was jedoch nach dem heutigen Stand der Technik aufgrund der Größe dieser Pixel eine kompakte Gestaltung des Sensors unterbindet und somit durch die Größe der PMD-Pixel im Bild im sichtbaren Lichtspektrum große Blindpixel erzeugt werden, welche durch Interpolation rekonstruiert werden müssten.

Erfindungsgemäß wird vorgeschlagen, einen Standard-2D-CMOS-Sensor um Sonderpixel in Form von pn-Photodioden, Photogate oder Pinned Photodioden zu erweitern, wobei die Entfernungsmessung und 3D-Rekonstruktion mittels dieser Pixel erfolgt. Diese Pixel erlauben eine kompaktere Bauart und können im Standard-CMOS-Prozess hergestellt werden. Daher können diese in vorteilhafter Weise in Kombination mit Pixeln für das sichtbare Licht einen kompakten Bildsensor bilden. Bei einem derartig gebildeten Sensor ist im Vergleich zu PMD-Sensoren auch eine verminderte IR-Strahlungsintensität notwendig, um eine 3D-Rekonstruktion zu erstellen, was auch zu einer Minimierung der Beeinflussung der Qualität des sichtbaren Bildanteils führt.

Analog zu den Ausführungen bezüglich eines herkömmlichen 2D-Bildsensors kann der Infrarot-Sperrfilter für die Pixel des Sensors, die keine Sonderpixel sind, entfallen oder dynamisch auf diese Pixel des Bildsensors bezogen ganz oder teilweise aktiviert und deaktiviert werden. Dadurch können auch die nicht als Sonderpixel ausgeführten Pixel des Sensors für den Fall eines nicht vorhandenen oder deaktivierten Infrarot-Sperrfilters für Aufnahmen im Infrarot-Bereich und für den Fall eines aktivierten Infrarot-Sperrfilters für Aufnahmen im sichtbaren Bereich mit hoher Qualität herangezogen werden. Diese Konzeption weist auch den Vorteil auf, dass die 3D-Auswerteelektronik in den Sensor integriert sein kann.

Mit der erfindungsgemäßen Kamera sind fünf Modi "Aufnahmen im sichtbaren Bereich", "Aufnahmen im Infrarot-Bereich", "Aufnahmen im sichtbaren und Infrarot-Bereich", "Aufnahmen im sichtbaren Bereich und 3D-Rekonstruktion" und "3D-Rekonstruktion" realisierbar. Im Rahmen einer Weiterbildung kann der Wellenlängenbereich des gepulsten Infrarotlichts zur Entfernungsmessung sehr schmal gewählt werden, wobei dies bei einem aktivierten Infrarot-Sperrfilter, der genau diesen Wellenlängenbereich sperrt und für einen Teil der Pixel des Sensors aktiviert ist, zu der Möglichkeit führt, eine 3D-Rekonstruktion gleichzeitig mit Aufnahmen im Infrarot-Bereich und optional im sichtbaren Bereich durchzuführen. Die der 3D-Rekonstruktion zugeordneten Pixel des Sensors können hierbei lediglich Infrarotlicht im Wellenlängenbereich des gepulsten Infrarotlichts empfangen.

Die Umschaltung zwischen den fünf Modi "Aufnahmen im sichtbaren Bereich", "Aufnahmen im Infrarot-Bereich", "Aufnahmen im sichtbaren und Infrarotbereich", "Aufnahmen im sichtbaren Bereich und 3D-Rekonstruktion" und "3D-Rekonstruktion" kann On-Demand per Software oder auch automatisch entsprechend dem jeweiligen Umgebungslicht erfolgen. So ist es z.B. möglich, vom Modus "Aufnahmen im sichtbaren Licht" in den Modus "Aufnahmen im Infrarot-Bereich" oder "Aufnahmen im sichtbaren und Infrarot-Bereich" automatisch umzuschalten, wenn die Umgebungshelligkeit einen Schwellenwert unterschreitet.

Beispielsweise kann für den Anwendungsfall Kennzeichenerfassung eines Kraftfahrzeugs eine Erhöhung der Gesamtrobustheit erreicht werden, wenn die Erfassung anhand der Auswertung von Aufnahmen im sichtbaren und Infrarot-Bereich erfolgt.

Die erfindungsgemäße Kamera kann z.B. bei Ein- oder Ausfahrten von Parkhäusern eingesetzt werden, um gleichzeitig oder sequentiell die Farbe eines Fahrzeugs im sichtbaren Bereich, das Nummernschild im sichtbaren und/oder Infrarot-Bereich und/oder die Abmessungen des Fahrzeugs im 3D-Rekonstruktionsmodus detektieren zu können.

Die zur 3D-Rekonstruktion erforderliche gepulste Infrarotquelle ist mit dem Sensorteil, d.h. mit den Pixeln die zur Entfernungsmessung herangezogen werden, synchronisiert, wobei die Infrarotquelle außerhalb des Sensors angeordnet sein kann.

Im Rahmen einer vorteilhaften Weiterbildung der Erfindung ist die gepulste Infrarotquelle in den Bildsensor integriert. Da die Infrarotquelle nur für eine extrem kurze Zeit aktiv ist und das reflektierte Infrarotlicht erst am Sensor eintrifft, wenn die Infrarotquelle bereits wieder abgeschaltet ist, wird durch diese Ausgestaltung der Sensor beim Eintreffen des reflektierten Infrarotlichtes nicht überstrahlt.

Eine gemäß der Erfindung ausgeführte Digitalkamera wird vorzugsweise zur Durchführung eines Verfahrens zum Betreiben einer Fahrzeugschranke mit einer Schrankensäule, einem Schrankenbaum und einem Antrieb zum Verschwenken des Schrankenbaumes zwischen einer Sperr- und einer Offenposition verwendet, bei dem zur Fahrzeugerkennung, zur Kennzeichenerfassung, zur Nachfahrerkennung und zur Vandalismusüberwachung eine Digitalkamera verwendet wird, deren Bilder von einer mit einer Steuerung der Fahrzeugschranke verbundenen Auswerteelektronik ausgewertet werden.

Die Funktionen Fahrzeugerkennung, Kennzeichenerfassung, Nachfahrerkennung und Vandalismusüberwachung können hierbei durch die im sichtbaren Bereich erstellen Bilder und/oder durch die im Infrarot-Bereich erstellten Bilder durchgeführt werden, wobei durch die parallele Auswertung der Bilder beider Bereiche die Robustheit der Ergebnisse erhöht wird. Beispielsweise kann bei schnee- oder eisbedeckten Kennzeichen die Kennzeichenerfassung im Infrarotbereich bessere Ergebnisse liefern. Der Infrarotbereich kann in vorteilhafter Weise zur Vandalismusüberwachung bei wenig Licht herangezogen werden.

Ferner kann durch die ermöglichte 3D- Rekonstruktion der erfassten Objekte eine genaue Fahrzeugerkennung und Klassifizierung des erfassten Objekts erfolgen; beispielsweise kann erkannt werden, ob das erfasste Objekt ein Kraftfahrzeug oder kein Kraftfahrzeug ist, und für den Fall, dass ein Kraftfahrzeug erfasst wird, um welche Art Kraftfahrzeug es sich handelt, so dass eine individuelle Tarifgestaltung für unterschiedliche Fahrzeugkategorien ermöglicht wird. Zudem ist es möglich, die Fahrzeugschranke geschlossen zu halten, wenn das erfasste Objekt kein Kraftfahrzeug ist.

Die 3D- Rekonstruktion kann mit dem Bild im sichtbaren Bereich kombiniert werden, um zusätzliche Informationen zu erhalten, beispielsweise über die Farbe des erfassten Fahrzeugs oder die Umgebungshelligkeit.

## Patentansprüche

1. Digitalkamera mit einem als CCD-oder CMOS-Sensor ausgeführten 2D-Bildsensor, mittels der anhand einer Laufzeitmessung bei Synchronisation mit einer gepulsten Infrarotquelle Entfernungen messbar sind und anhand der gemessenen Entfernungen eine 3D- Rekonstruktion eines erfassten Objektes durchführbar ist, **dadurch gekennzeichnet, dass** sie keinen Infrarot-Sperrfilter aufweist oder dass sie einen Infrarot-Sperrfilter aufweist, der dynamisch auf die Pixel des Bildsensors bezogen ganz oder teilweise aktivierbar und deaktivierbar ist, wobei für den Fall, dass der Infrarot-Sperrfilter dynamisch auf die Pixel des Bildsensors bezogen ganz oder teilweise aktivierbar und deaktivierbar ist, einzelne Bereiche des Bildsensors, für die der Infrarot-Sperrfilter deaktiviert ist, für die 3D-Rekonstruktion oder für Aufnahmen im Infrarotbereich verwendet werden, wobei die verbleibenden Bereiche des Sensors für Aufnahmen hoher Farbqualität im sichtbaren Lichtspektrum verwendet werden und wobei für den Fall, dass kein Infrarot-Sperrfilter vorhanden ist, einzelne Bereiche des Bildsensors für die 3D-Rekonstruktion oder für Aufnahmen im Infrarotbereich verwendet werden, wobei die verbleibenden Bereiche des Sensors für Aufnahmen im sichtbaren Lichtspektrum verwendet werden.

2. Digitalkamera nach Anspruch 1, **dadurch gekennzeichnet, dass** die jeweiligen Bereiche des Sensors entweder zusammenhängend sind, sodass einzelne Bereiche umfassend jeweils mehrere Pixel für die 3D-Rekonstruktion und/oder für Aufnahmen im Infrarotbereich und einzelne Bereiche umfassend jeweils mehrere Pixel für Aufnahmen im sichtbaren Lichtspektrum genutzt werden oder dass die Sensorfläche alternierend pixelweise der 3D-Rekonstruktion und/oder den Aufnahmen im Infrarotbereich und Aufnahmen im sichtbaren Lichtspektrum zugeordnet ist.

3. Digitalkamera nach Anspruch 1, **dadurch gekennzeichnet, dass** der Infrarot-Sperrfilter für die gesamte Sensorfläche im Zeitmultiplex-Betrieb aktivierbar und deaktivierbar ist, wobei die Verwendung des Sensors für Aufnahmen im Infrarot-Bereich inklusive 3D-Rekonstruktion und für Aufnahmen im sichtbaren Lichtspektrum zeitlich einteilbar ist.

4. Digitalkamera mit einem als CMOS-Sensor ausgeführten 2D-Bildsensor, mittels der anhand einer Laufzeitmessung bei Synchronisation mit einer gepulsten Infrarotquelle Entfernungen messbar sind und anhand der gemessenen Entfernungen eine 3D- Rekonstruktion eines erfassten Objektes durchführbar ist, **dadurch gekennzeichnet, dass** der Bildsensor um Sonderpixel in Form von pn-Photodioden, Photogate oder Pinned Photodioden erweitert ist, wobei die Entfernungsmessung und 3D-Rekonstruktion mittels der Sonderpixel erfolgt.

5. Digitalkamera nach Anspruch 4, **dadurch gekennzeichnet, dass** die Pixel des Sensors, die keine Sonderpixel sind, keinen Infrarot-Sperrfilter aufweisen oder einen Infrarot-Sperrfilter aufweisen, der dynamisch auf diese Pixel des Bildsensors bezogen ganz oder teilweise aktivierbar und deaktivierbar ist, wobei einzelne Bereiche des Bildsensors, für die der Infrarot-Sperrfilter deaktiviert ist, für Aufnahmen im Infrarot-Bereich verwendet werden, wobei die verbleibenden Bereiche des Sensors für Aufnahmen hoher Farbqualität im sichtbaren Lichtspektrum verwendet werden und wobei für den Fall, dass kein Infrarot-Sperrfilter vorhanden ist, einzelne Bereiche des Bildsensors für Aufnahmen im Infrarot-Bereich verwendet werden, wobei die verbleibenden Bereiche des Sensors für Aufnahmen im sichtbaren Lichtspektrum verwendet werden.

6. Digitalkamera nach Anspruch 4 oder 5, **dadurch gekennzeichnet, dass** die 3D-Auswerteelektronik in den Sensor integriert ist.

7. Digitalkamera nach einem der vorangehenden Ansprüche, **dadurch gekennzeichnet, dass** fünf Modi "Aufnahmen im sichtbaren Bereich", "Aufnahmen im Infrarot-Bereich", "Aufnahmen im sichtbaren und Infrarot-Bereich", "Aufnahmen im sichtbaren Bereich und 3D-Rekonstruktion" und "3D-Rekonstruktion" realisierbar sind.

8. Digitalkamera nach einem der vorangehenden Ansprüche, **dadurch gekennzeichnet, dass** die gepulste Infrarotquelle in den Bildsensor integriert ist.

9. Digitalkamera nach einem der vorangehenden Ansprüche, **dadurch gekennzeichnet, dass** die Infrarot-Sperrfilter als dielektrische Interferenzfilter in oder ohne Kombination mit einer einstellbaren Mikrospiegelanordnung, piezo-elektrisch steuerbare Interferenzfilter oder elektrisch abstimmbare Flüssigkristallfilter ausgeführt sind.

10. Verwendung einer Digitalkamera nach einem der vorangehenden Ansprüche zur Durchführung eines Verfahrens zum Betreiben einer Fahrzeugschranke mit einer Schrankensäule, einem Schrankenbaum und einem Antrieb zum Verschwenken des Schrankenbaumes zwischen einer Sperr- und einer Offenposition, bei dem zur Fahrzeugerkennung, zur Kennzeichenerfassung, zur Nachfahrerkennung und zur Vandalismusüberwachung eine Digitalkamera verwendet wird, deren Bilder von einer mit einer Steuerung der Fahrzeugschranke verbundenen Auswerteelektronik ausgewertet werden.
